# EUROPÄISCHE PATENTSCHRIFT

(11) **EP 0 722 853 B1**
(45) Veröffentlichungstag und Bekanntmachung des Hinweises auf die Patenterteilung: **03.04.2002**
(21) Anmeldenummer: 95120317.3
(22) Anmeldetag: 21.12.1995
(51) Int. Cl.: B60C 15/036, B60B 25/00, B29D 30/08

(54) **Fahrzeugrad, Verfahren zur Herstellung eines Fahrzeugrades und Verwendung einer Felge eines Fahrzeugrads**
Vehicle wheel and manufacturing process
Roue pour véhicule et procédé de fabrication

(30) Priorität: 23.12.1994 DE 4446234
(43) Veröffentlichungstag der Anmeldung: 24.07.1996
(73) Patentinhaber: Continental Aktiengesellschaft, 30165 Hannover (DE)
(72) Erfinder: Gaida, Markus, D-30171 Hannover (DE); Wedemeyer, Lutz, D-31515 Wunstdorf (DE); Blickwedel, Holger, Dr., D-30175 Hannover (DE); Sergel, Horst, D-30675 Hannover (DE); Schroeder, Martin, D-30165 Hannover (DE); Glinz, Michael, 37535 Neustadt (DE)

(56) Entgegenhaltungen:
- EP-A- 0 551 669
- WO-A-92/00846
- DE-A- 2 157 076

## Beschreibung

Die Erfindung betrifft ein Fahrzeugrad bestehend aus einer Felge und einem Fahrzeugluftreifen sowie ein Verfahren zur Herstellung eines Fahrzeugrades und die Verwendung einer Felge eines Fahrzeugrads. Herkömmliche Fahrzeugluftreifen werden üblicherweise zunächst auf speziellen Aufbaumaschinen mit zylinderförmigen Aufbautrommeln aufgebaut. Die mit Wulstkernen bestückten Reifenrohlinge werden im Anschluß daran bombiert und erhalten dabei ihre Reifentorusform. Bei Gürtelreifen wird das auf diese Weise gebildete Karkassenpaket mit einem vorgefertigten übergestülpten einen Gürtel beinhaltenden Laufstreifenpaket verbunden. Die zylindrische Aufbautrommel ermöglicht dabei, einen nahezu axial gestreckten einfachen und genauen Aufbau der Karkasse. Erst in einem zweiten Verfahrensschritt wird durch die Bombage die radiale Erhebung zur Erzeugung der Torusform bewirkt.

Ein in dieser Weise zuverlässig und sicher aufgebaute Reifenrohling herkömmlicher Bauart wird üblicherweise im Anschluß an den vollständigen Aufbau des Reifens vulkanisiert. Bereits vulkanisierte Reifen werden nach der Vulkanisation zwischengelagert, transportiert und an einer speziell eingerichteten Montagestelle, beispielsweise in einer Werkstatt oder beim Erstausrüster, auf eine Felge in aufwendigem Prozeß montiert. Hierzu sind speziell ausgebildete Felgen erforderlich, die eine Montage nach der Vulkanisation überhaupt erst ermöglichen. Beispielsweise werden derartige Felgen üblicherweise mit Tiefbett ausgebildet. Notlaufeigenschaften sind mit derartigen Felgen nur bedingt und wenig zufriedenstellend, wenn überhaupt, erzielbar. Sowohl bei Transport als auch bei Lagerung des Reifens kann der Reifen, der von radial innen keinerlei Formstütze erhält, derart belastet werden, daß bleibende Verformungen, insbesondere im Kernbereich, und somit Exzentrizitäten nicht auszuschließen sind. Der kurz vor der Montage aus einer Vielzahl von Reifen mehr oder weniger in Passung und Rundlauf als geeignet mit hohem Aufwand ermittelte für eine spezielle Felge geeignete Reifen und die Felge werden hierzu aufwendig auf ihre Rundlaufgenauigkeiten und Exzentrizitäten überprüft, um eine optimierte Montageposition zu ermitteln, mit der die Summe der Ungenauigkeiten von Felge und Reifen nach Montage möglichst minimiert werden sollen. Im anschließenden Montagevorgang können Reifen und Felge trotz der aufwendigen Ermittlungen vor der Montage für eine optimierte Zuordnung eines Reifens zu einer Felge noch einmal undefiniert belastet werden, wodurch weitere Ungenauigkeiten nicht auszuschließen sind.

Aus der DE-OS 21 57 076 ist ein Fahrzeugrad bekannt, bei dem ein Fahrzeugreifen vor Vulkanisation durch Einklemmen der axial nach radial außen geknickten Endbereiche einer einstückig ausgebildeten Felge zwischen Karkaßlagen vor der Vulkanisation befestigt ist. Auch wenn bei diesem Reifen Exzentrizitäten und Rundlaufungenauigkeiten durch Lagerung, Transport und Montage auf eine eigens hierfür montagefreundlich ausgebildete Felge nach der Vulkanisation entfallen, wird auch dieser Reifen zunächst in herkömmlicher Weise mit spezieller Aufbautrommel aufgebaut und bombiert. Der Reifen muß im Anschluß daran von der Montagestation mit Aufbautrommel und von der Bombiereinrichtung vollständig entfernt werden und im noch plastischem Zustand von radial innen ungestützt an die Felge herangebracht und dort in der bereits bei Bombage hergestellten Torusform auf der Felge durch Auseinanderziehen der Karkassenschichten, anschließendes Aufsetzen des hierdurch zwischen den Karkassen erzeugten Ringspaltes auf die Felgenhörner montiert werden. Bei der Demontage von der Aufbautrommel, beim Transport sowie bei der Zwischenlagerung und bei der aufwendigen Montage auf die Felgenhörner können Deformationen und Rundlaufungenauigkeiten erzeugt werden, die sich nach anschließender Vulkanisation auch negativ auf den Reifen und seine Qualität auswirken können.

Aus der DE 37 01 513 A1 ist ein Fahrzeugreifen bekannt, bei dem der Reifen nach erfolgter Vulkanisation mit seinen Wulstkernen von radial innen in einer speziell ausgebildeten Felge befestigt werden. Die Felge ist in ihrem radial äußeren Bereich als Stützfläche für den Notlauf des Reifens bei Druckluftverlust im Inneren des Reifens ausgebildet. Auch hier sind Rundlaufprobleme und Exzentrizitäten aufgrund von bleibenden Verformungen bei der Demontage von der Aufbautrommel, beim Transport, bei der Lagerung oder bei der Montage des Reifens auf die Felge möglich.

Aus der WO 92/00846 ist ein herkömmliches Fahrzeugrad mit einem Reifen, der auf der radialen Außenseite einer zweigeteilten Felge mit Hilfe von Reifenkernen befestigt ist, bekannt. Aus dem Dokument ist es bekannt, den Sitz der Kerne auf der Felge und somit die Rundlaufgenauigkeit des Fahrzeugreifens auf der Felge dadurch zu verbessern, daß die Wulstkerne beim Aufbau des Reifens direkt in ihre nutförmigen Sitzflächen auf der Felge aufgewickelt werden. Um dies zu ermöglichen, wird zunächst die Karkasse auf der radialen Außenseite der axial voneinander beabstandeten Felgenteile und auf einer zwischen den beiden Felgenteilen angeordneten Aufbautrommel aufgelegt und dann im Bereich der Umfangsnuten zum Sitz des Wulstkerns auf der Felge das Kernmaterial aufgewickelt. Zur Erzeugung der Torusform wird die Aufbautrommel entfernt. Die beiden Felgenteile werden aufeinander zubewegt. Der Kern verbleibt in seiner Kernsitzfläche auf der Felge auch während der Vulkanisation. Notlauf spielt bei dem aus Dokument D1 bekannten Fahrzeugrad keine Rolle.

Der Erfindung liegt das Problem zugrunde, mit einfachen Mitteln ein Fahrzeugrad mit besser einstellbaren Notlaufeigenschaften und höherer Rundlaufgenauigkeit zu erzeugen.

Das Problem wird erfindungsgemäß durch das Fahrzeugrad gemäß den Merkmalen von Anspruch 1 sowie durch das Verfahren zum Herstellen eines Fahrzeugrads gemäß den Merkmalen von Anspruch 4 sowie durch die Verwendung einer Felge gemäß den Merkmalen von Anspruch 15 gelöst.

Die Ausbildung des Fahrzeugrades mit vor der Vulkanisation auf die Felge aufgebauten Reifen mit axial in ihrer Erstreckung veränderbarer Felge ermöglicht bereits den Aufbau des Fahrzeugreifenrohlings auf die Felge. Dabei können die Vorteile des sehr genauen axial gestreckten Aufbaus der inneren Reifenlagen auf einer nahezu zylindrisch ausgebildeten Aufbaufläche, nämlich bereits auf der Felge und der anschließenden radialen Erhebung zur Torusform nämlich nach axialer Verkleinerung der axialen Erstreckung der Felge, wie sie bei herkömmlichen Reifenaufbauverfahren mit Aufbautrommeln und Bombageeinrichtungen erzielbar sind, beibehalten werden. Deformationen, Rundlaufungenauigkeiten oder andere Ungenauigkeiten, die durch das Entfernen des Fahrzeugluftreifenrohlings von der Aufbautrommel bei herkömmlichen Reifen, bei dem Transport, bei Vulkanisation und bis zur Montage auf die Felge erzeugt werden, entfallen. Der Fahrzeugreifenrohling wird bereits zentriert auf der Felge aufgebaut und in dem zentriertem Zustand direkt vulkanisiert. Zusätzliche Verfahrensschritte für aufwendige Zwischenlagerungen von Felge einerseits und Reifen andererseits, sowie zu deren Zusammenführung und für nur mit hohem Aufwand bei herkömmlichen Fahrzeugreifen zu erzielenden Genauigkeiten können entfallen.

Durch die Stützflächenbereiche, die vor dem Aufbringen des Reifenaufbaumaterials auf der Felge aufgebracht werden, können Notlaufeigenschaften ohne Berücksichtigung späterer Montagevorgänge besser an Notlaufsituationen angepaßt erzeugt werden. Eine nahezu zylindrische Fläche verbessert zudem die Aufbaugenauigkeit des Reifens.

Die Ausbildung des Fahrzeugrads gemäß den Merkmalen von Anspruch 2 ermöglicht eine besonders einfache Ausbildung der axialen Veränderbarkeit der Felge mit einfachen Mitteln und geringem Fertigungs- und Montageaufwand. Bevorzugt ist die Ausbildung des axial entfernbaren Felgenelementes als Reifenaufbautrommel. Die Felge besteht somit aus Reifenaufbautrommel und weiteren Felgenelementen.

Der Reifen wird in herkömmlicher Weise auf diese Felge aufgebaut. Die Reifenaufbautrommel wird im Anschluß daran in bekannter Weise konzentrisch verkleinert. Die verbleibenden Felgenelemente können danach zusammengeschoben werden. Der Aufbau des Reifens ist besonders einfach unter Einbezug von für die Reifenherstellung bereits vorhandener Mittel möglich.

Bevorzugt ist das Verfahren von Anspruch 5. Das Kautschukmaterial kann, wie in herkömmlichen Verfahren, zentriert und axial gestreckt aufgebaut werden und durch radiale Erhebung in Reifentorusform gebracht werden. Die Vorteile herkömmlicher Reifenaufbauverfahren können einfach beibehalten werden.

Bevorzugt ist das Verfahren gemäß den Merkmalen von Anspruch 5, wobei die axiale Verkleinerung der Felge durch Entfernen von zumindest einem axialen Element der Felge und anschließendes axiales Zusammenrücken der verbleibenden Felgenelemente erfolgt. Dies Verfahren ist besonders einfach in der Anwendung und steuerungstechnisch einfach auch zur automatisierten Fertigung einsetzbar. Nach Entfernen des axialen Elements der Felge auf automatisiertem Wege können beispielsweise durch gesteuerte Schiebemittel die verbleibenden Felgenelemente aufeinander zubewegt und die Felge somit geschlossen werden.

Bevorzugt, weil mit einfacheren Mitteln im Herstellungsprozeß durchzuführen, ist das Verfahren gemäß den Merkmalen von Anspruch 7. Vorteilhafterweise wird nach axialer Verkleinerung der Felge auf die radiale Innenseite der Felge zumindest eine dichtende Kautschuklage über die Stoßstellen der zusammengeschobenen Felgenelemente aufgebracht. Hierdurch kann Luftaustritt während des Reifenbetriebes zwischen den Felgenelementen noch sicherer vermieden werden. Bei bekannten zweiteiligen Felgen zur Montage eines Reifens nach der Vulkanisation ist eine sichere Abdichtung nur mit aufwendigen Mitteln zu erreichen.

Bevorzugt wird nach konzentrischem Auftrennen der radial innerhalb der Felge angeordneten Karkassenschichten ein konzentrischer Karkassenstreifen entfernt. Starke Überlappungen des Karkassenmaterials in diesem Bereich sowie ungewünscht hohe Materialansammlungen aufgrund solcher Überlappungen können somit vermieden werden.

Bevorzugt werden die durch die Auftrennung der Karkasse entstandenen Karkassenenden nach axialer Verkleinerung der Felge wieder dichtend miteinander verbunden. Hierdurch wird eine rundum abgedichtete Ausbildung des Reifens über die gesamte Torusform ermöglicht.

Bevorzugt wird der Innenraum des Reifens durch die Felge hindurch für die Vulkanisation mit heißem Fluid unter Innendruck beaufschlagt. Hierdurch wird eine zuverlässige, exakte Profilabbildung durch eine letzte Erhebung in der Vulkanisationsmulde gewährleistet. Durch heißes Fluid kann zusätzlich auch Vulkanisation von innen erfolgen. Beispielsweise kann durch in die Felge eingelassene Ventile in der Vulkanisiermulde Heißdampf mit Innendruck in den durch Reifen und Felge erzeugten Innenraum gepumpt werden. Wie bei einer herkömmlichen Vulkanisiereinrichtung wird somit der Reifen nicht nur über die von außen wirkende Vulkanisationsmulde, sondern auch von innen wie mit einem bei herkömmlichen Vulkanisiereinrichtungen wirkenden Heizbalg von innen beheizt. Nach erfolgter Vulkanisation kann das heiße Fluid ebenfalls durch die Felge entweichen oder abgesaugt werden.

Bevorzugt wird die Felge in ihrem radial äußeren Oberflächenbereich mit Stützmaterial zur Herstellung einer Notlauffläche ausgebildet. Somit sind auch Notlaufeigenschaften bei Innendruckverlust gewährleistbar.

Das Verfahren zur Herstellung eines Fahrzeugreifens gemäß den Merkmalen von Anspruch 14 ermöglicht die Vorteile des bewährten Aufbaues der einzelnen Karkassenlagen auf einem trommelähnlichen Körper mit ebener axial gespannter Lagenanordnung ohne die durch Abnahme des aufgebauten Torus vom Aufbaukörper, Zwischenlagerungen, Transporte vor und nach der Vulkanisation und Demontage bedingten Rundlaufprobleme und Deformationen auch bei Fahrzeugrädern mit radial innerhalb axial gestützt eingelegten konzentrischen Kernringen.

Die Verwendung einer Felge eines Fahrzeugrades sowohl als Träger von Reifenaufbaumaterial während des Reifenaufbaus als auch als Träger des fertig vulkanisierten Reifens im Betriebszustand des Fahrzeugrades ermöglicht den bewährten Reifenaufbau auf einem trommelähnlichen Körper in zentriertem Zustand und unter Beibehaltung des zentrierten Zustand bis zum Betrieb am Fahrzeug.

Bevorzugt wird die Felge gleichzeitig als dichtendes Kammerelement beim Aufbau des Innendrucks im Reifen bei der Vulkanisation eingesetzt. Zusätzliche Dichtwände für die Vulkanisation können entfallen. Reifen und Felge dienen selbst als Heizbalg, wodurch eine einfacher gestaltete Vulkanisiereinrichtung einsetzbar ist.

Die Erfindung wird im Folgenden anhand der in den Figuren 1 bis 7 dargestellten Ausführungsbeispiele näher erläutert. Hierin zeigen
- Fig. 1: schematisch die erfindungsgemäße Herstellung eines Fahrzeugrades mit konventioneller Karkassenlagenauflegung,
- Fig. 2: Vulkanisation des erzeugten Fahrzeugrades,
- Fig. 3: Befestigung des Fahrzeugrades auf einer Felgenschüssel,

- Fig. 4: Erfindungsgemäße Herstellung eines Fahrzeugrades mit Erzeugung der Karkassenschicht durch Rundumwickeln,
- Fig. 5: Erfindungsgemäße Herstellung eines Fahrzeugrades mit radial innerhalb der Felge axial festgelegten Kernwulsten,
- Fig. 6: Querschnittsdarstellung einer erfindungsgemäßen Felge, und
- Fig. 7: Querschnittsdarstellung einer erfindungsgemäßen Felge mit eingelassenem Stützmaterial zur Verbesserung der Notlaufeigenschaften.

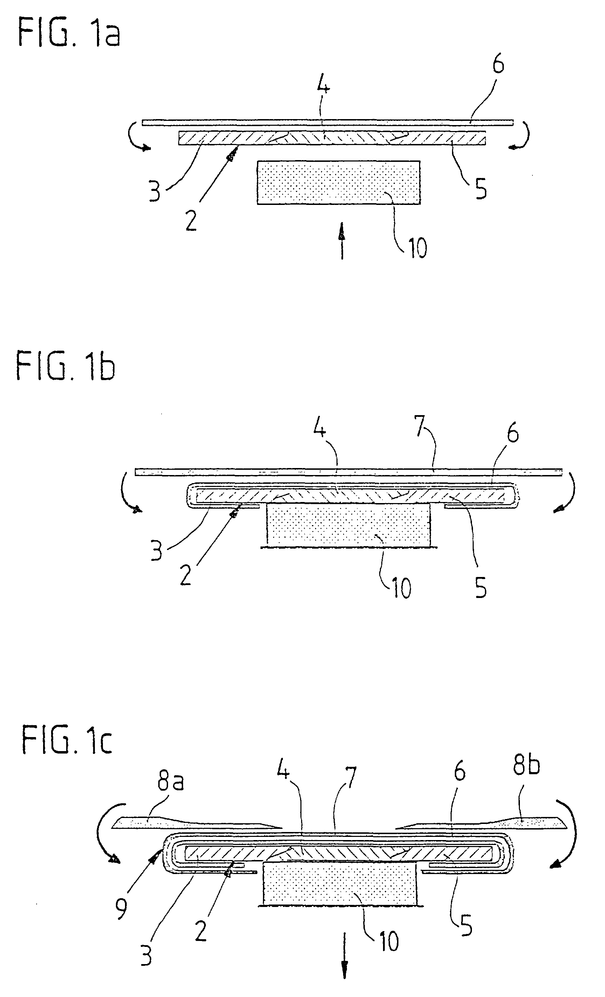

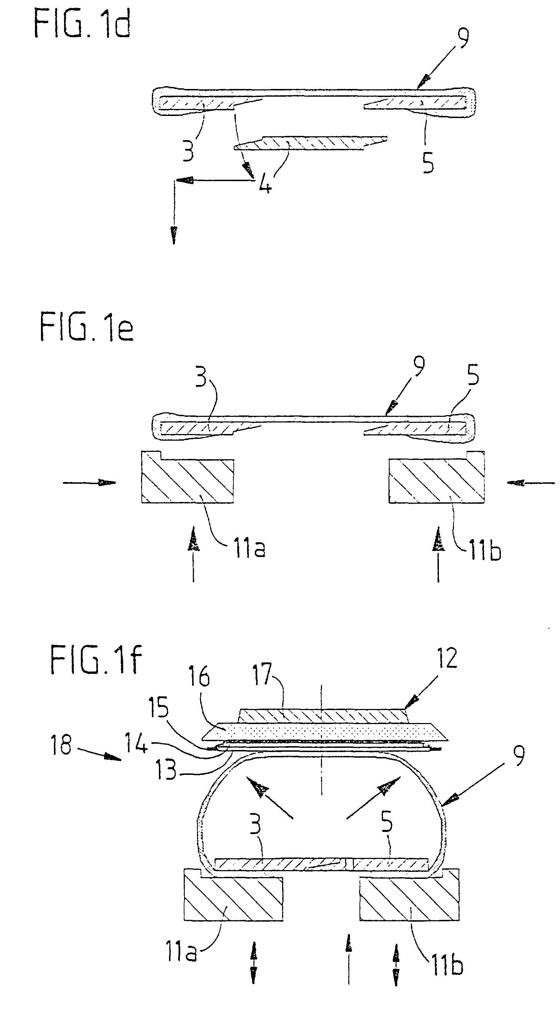

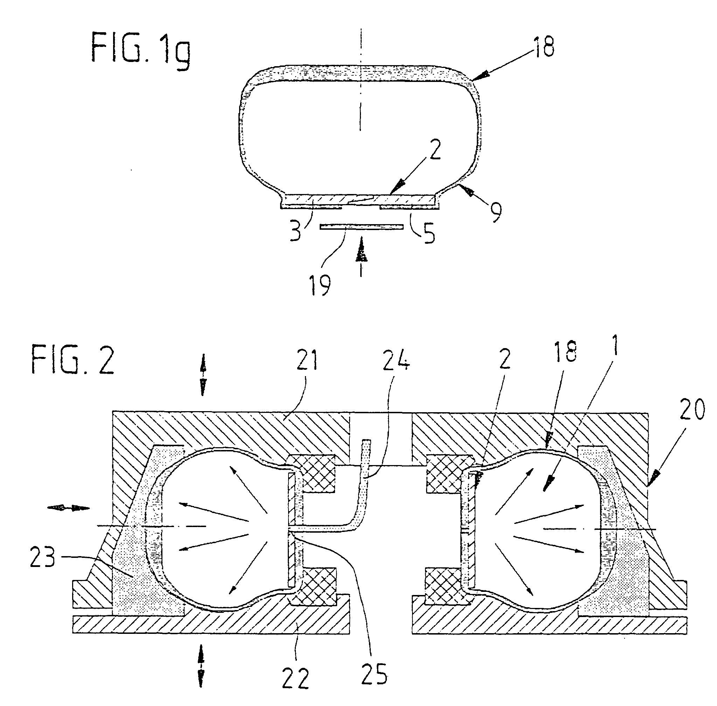

In Fig. 1 ist der erfindungsgemäße Aufbau eines Fahrzeugrads in einer Schnittebene, die die Reifenachse beinhaltet, schematisch dargestellt. Die Reifenachse ist in der Fig. 1 a schematisch mit gestrichelter Linie dargestellt. Wie in Fig.1a zu erkennen ist, wird eine ringförmige Felge 2, bestehend aus konzentrischen axial hintereinander angeordneten, miteinander in zentriertem Berührkontakt befindlichen Felgenelementen 3, 4 und 5, auf einen Spannkopf mit konzentrischen radial innerhalb der Felge 2 angeordneten, über den Umfang verteilten Spannkopfelementen 10 axial aufgeschoben. Die Spannkopfelemente 10 werden entsprechend der Fig. 1a dargestellten Pfeilrichtung radial nach außen verfahren, bis sie die Felge 2 von der Felgeninnenseite berühren und somit die Felge 2 konzentrisch zur gewünschten Reifenachse aufspannen. Im Anschluß daran wird eine über den Umfang der Felge 2 reichende axial über die axialen Felgenenden der Felgenelemente 3 und 5 hinausreichende Innenschicht 6 in bekannter Weise aufgelegt und die axial über die axialen Felgenenden hinausstehenden Innenschichtenden um die Felge radial nach innen entsprechend der Pfeildarstellung umgeklappt.

Wie in Fig. 1b dargestellt ist, wird im Anschluß daran eine oder, wie nicht dargestellt ist, mehrere sich über den Umfang der Felge erstreckende axial über die Felgenenden hinausreichende Karkassenschicht 7 aufgelegt. Die über die axialen Enden der Felge 2 hinausreichenden Endbereiche der Karkassenschicht 7 werden im Anschluß daran radial nach innen, entsprechend der Pfeildarstellung von Fig. 1b, um die Felge umgeklappt. Entsprechend der Darstellung von Fig. 1c wird im axial äußeren Bereich der Felge radial oberhalb der Felge auf die Karkassenschicht jeweils ein sich über den Umfang der Felge reichender und über das jeweilige Felgenende hinweg axial erstreckender Seitenstreifen 8a und 8b aufgelegt und im Anschluß daran mit seinem über das jeweilige Felgenende hinwegreichenden axialen Endbereich, entsprechend der Pfeildarstellung von Fig. 1c, radial nach innen um die Felge umgeklappt. Im Anschluß daran wird der Spannkopf durch radiales Zusammenziehen der einzelnen Spannkopfelemente 10 von der Felge gelöst und die Felge 2 mit dem auf ihr aus Innenschicht 6, Karkassenschicht 7 und Seitenstreifen 8a, 8b gebildeten Unterbaupaket 9 axial vom Spannkopf entfernt.

In einem weiteren Verfahrensschritt, gemäß der Darstellung von Fig. 1d, wird das mittlere Felgenelement 4, das aus einzelnen über den Umfang verteilt angeordneten, benachbarten Felgenelementsegmenten besteht, durch Herausziehen der einzelnen Felgenelemente 4 nacheinander entfernt.

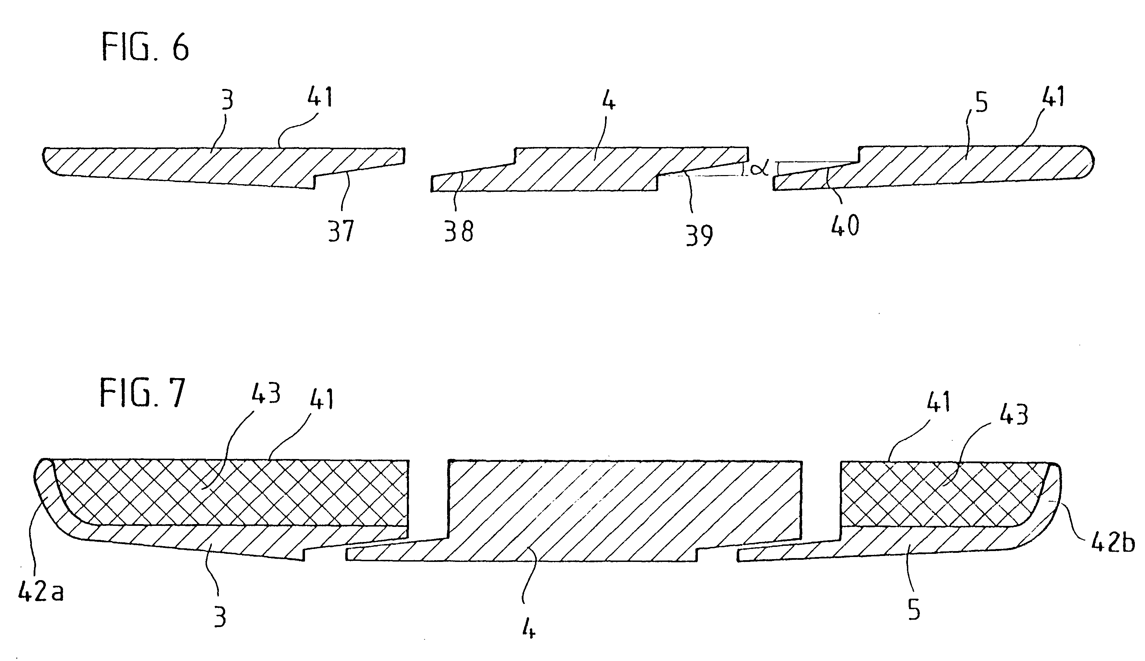

Wie in Fig. 6 dargestellt ist, sind die einzelnen Felgenelemente 3, 4 und 5 jeweils mit korrespondierenden konischen Halteflächen 37, 38, 39, 40 ausgebildet, die zur Achsrichtungjeweils unter einem Winkel α zwischen 2 und 12 Grad, bevorzugt 5 Grad einnehmen. Die einzelnen Segmente des Felgenelements 4 können dabei durch eine leichte Kippbewegung - entsprechend dem Bewegungspfeil von Fig. 1d - aus ihrer-Felgenposition gekippt und anschließend radial nach innen - entsprechend dem Bewegungspfeil von Fig 1d - weggezogen werden. Die verbleibenden Felgenelemente 3 und 5 mit dem auf ihnen aufliegenden Unterbaupaket 9 werden auf konzentrische Lagerböcke 11a, 11b von Fig. 1e axial aufgeschoben. Die konzentrischen Lagerböcke 11a, 11b weisen ebenso wie der Lagerbock 10 über den Umfang verteilte radial bewegliche Spannkopfelemente 11a, 11b auf. Durch radiales Bewegen dieser Spannkopfelemente nach außen werden die Felgenelemente 3 und 5 konzentrisch aufgespannt. Ebenso ist es auch denkbar, nicht die konzentrischen Felgenelemente 3 und 5 mit dem Unterbaupaket 9 axial auf die Lagerböcke 11a, 11b aufzuschieben, sondern die konzentrischen Lagerböcke 11a, 11b jeweils von axial außen entsprechend der Pfeildarstellung von Fig. 1e axial nach innen in radial innerhalb der Felgenelemente 3 und 5 in die Felge einzuschieben, um die Felgenelemente 3 und 5 im Anschluß daran durch radiales Verfahren der Lagerböcke aufzuspannen.

Zur sichereren Beibehaltung der zentrierten Anordnung ist es auch denkbar, falls erforderlich, die Felgenelemente 3 und 5 schon vor Entfernen der Felgenelemente 4 durch die Lagerböcke 11a und 11b aufzuspannen.

Die Lagerböcke 11a, 11b werden im Anschluß daran axial soweit nach innen konzentrisch aufeinander zubewegt, bis die Felgenelemente 3 und 5 in dreh- und schiebefeste Verbindung gelangen. Die konischen Flächen 37 von Fig. 6 ermöglichen dabei eine zentrierte feste Verbindung durch Reibkontakt. Zusätzlich kann die Verbindung, falls erforderlich, axial durch nicht dargestellte, über den Umfang verteilte bekannte Sicherungsmittel beispielsweise durch Verschraubung gegen axiales Lösen gesichert werden.

Durch Durchgangsbohrungen im Felgenelement 5 oder im Felgenelement 3 oder aber in beiden Felgenelementen 3 und 5 wird zwischen oberhalb der Felgenelemente befindlichem Unterbaupaket 9 und den Felgenelementen 3 und 5 Druckluft eingeblasen. Hierzu können herkömmliche Druckluftaggregate, beispielsweise über eine oder mehrere nicht dargestellte Schlauchverbindung, und, falls erforderlich, mit in die Bohrungen eingeschraubten Ventilen erfolgen. Aufgrund der Erhöhung des Innendrucks erhebt sich das Unterbaupaket 9 entsprechend der Darstellung von Fig. 1f in eine Torusform. Bei der Erhebung wird der radial äußere Bereich der Torusform mit dem zuvor bereits in herkömmlicher Weise vorgefertigten Laufbandpaket 12 - bestehend aus einer ersten Gürtellage 13, einer zweiten Gürtellage 14, einer Bandage 15, einem Laufstreifenunterbau 16 und einem Laufstreifen 17, das konzentrisch in bekannter Weise axial über den Unterbau 9 geschoben worden ist - verbunden. Die axial überstehenden Bereiche des Laufbandpakets 12 werden in bekannter Weise radial nach unten auf das Unterbaupaket 9 aufgedrückt.

Nach Entfernen des Druckluftanschlusses und nach Entlüftung des Reifeninnenraums ist es denkbar, zur Verbesserung der Dichtwirkung, wie in Fig. 1g dargestellt ist, über den Umfang der Felge 2 radial innerhalb der Felge 2 zumindest im Verbindungsbereich der Felgenelemente 3 und 5 einen sich axial erstreckenden Kautschukstreifen 19 aufzulegen. Zur Rundumdichtung ist es denkbar, den Kautschukdichtstreifen 19, wie in Fig. 1g dargestellt ist, über den gesamten gebildeten ergebenden Spaltbereich zwischen den jeweiligen axialen Enden des Unterbaupakets 9 zu erstrecken. Zur Erhöhung des axialen Zusammenhalts der Felge kann der Kautschukdichtstreifen mit Festigkeitsträgern ausgebildet werden.

Der derartig aus Felge 2, Unterbaupaket 9, Laufbandpaket 12, und Kautschukdichtstreifen 19 gebildete Fahrzeugradrohling wird im Anschluß daran, wie in Fig. 2 dargestellt ist, in eine herkömmlichen Vulkanisationspresse 20 - bestehend aus den Vulkanisierformseitenteilen 21 und 22, die axial seitlich an den Fahrzeugradrohling 18 in bekannter Weise herangefahren werden, und den über den Umfang verteilt angeordneten bekannten zentripetal beweglichen Profilsegmenten 23, 28 der Vulkanisierform 20, die auf die Lauffläche des Reifens einwirken und die die Laufflächenprofilierung in bekannterweise erzeugen - eingelegt. Durch eine oder auch mehrere Öffnungen 25 in der Felge 2, wird über einen oder mehrere Anschlußschläuche 24 Heißdampf in den Torus des Fahrzeugradrohlings 18 eingepreßt. Der dadurch im Torus entstehende Innendruck sorgt für die beim Vulkanisationsprozeß gewünschte letzte Erhebung des Kautschukmaterials, die dafür sorgt, daß das Reifenmaterial, vor allen Dingen im Laufstreifenbereich, sicher in die Form der Profilsegmente 23 eingedrückt und die gewünschte Reifenprofilierung sicher abgebildet wird. Die erhitzte Form, sowie die erhöhte Temperatur im Fahrzeugrad sorgen für eine gleichmäßige Vulkanisation durch Wärme von außen und aus dem Inneren des Fahrzeugrades. Bei fehlender Ausbildung des Kautschukdichtstreifens 19 über den gesamten axialen Freiraum zwischen den axialen Enden des Unterbaupakets dient die Felge 2 auch als dichtende Kammerwand bei der Vulkanisation.

Es ist denkbar, die Bohrungen 25 mit einem Gewinde zu versehen, so daß eine korrespondierende Schlauchkupplung vom Anschlußschlauch 24 einfach und sicher eingeschraubt werden kann. Zweckmäßigerweise entsprechen die Anschlußöffnungen 25 dabei zumindest teilweise den zur Erzeugung der Bombage von Fig. 1f.

Nach erfolgter Vulkanisation wird der Reifen durch Auseinanderfahren der Vulkanisierformseitenteile 21, 22 und der zentripetal beweglichen Profilsegmente 23 aus der Vulkanisationspresse 20 entnommen. Das der Vulkanisationspresse 20 entnommene Fahrzeugrad weist dabei einen vollständig auf die Felge 2 montierten Fahrzeugreifen auf. Die Haftung zwischen Gummi und Metall wurde in bekannter Weise durch Haftmittel, die vor Aufbau an der radialen Felgeninnenseite aufgebracht wurden, bei der Vulkanisation erzielt.

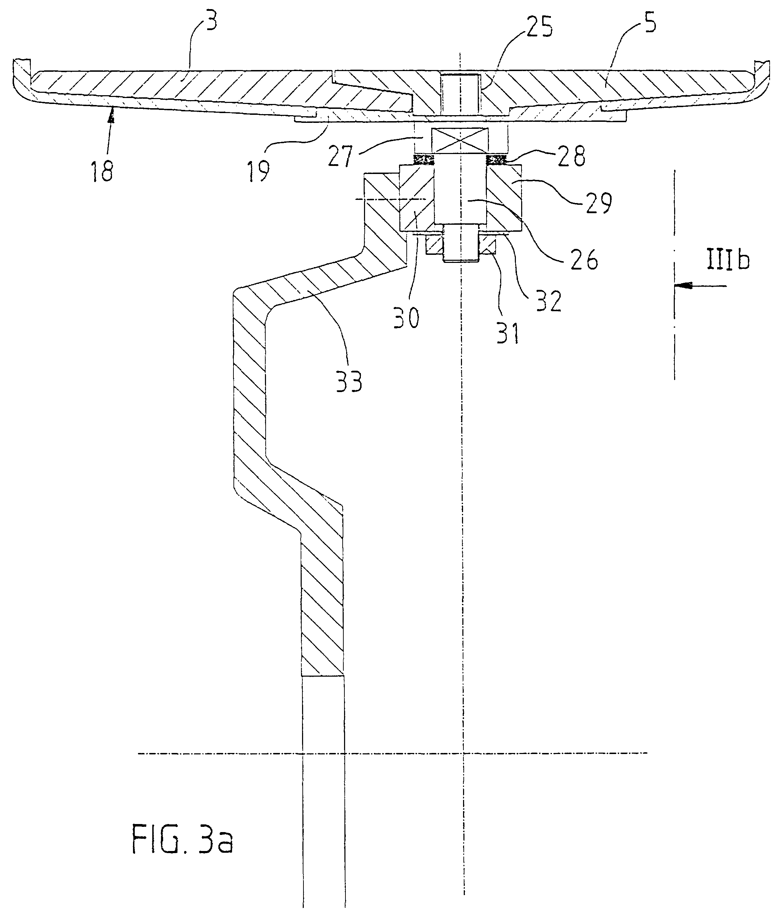

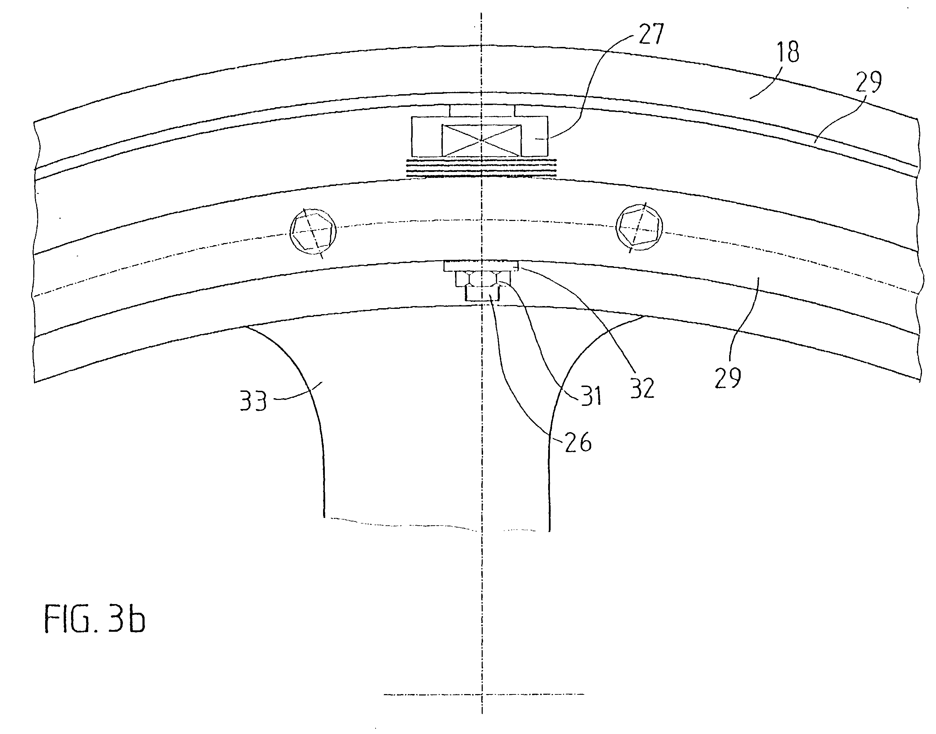

Das Fahrzeugrad kann individuellen Wünschen entsprechend sofort oder auch zu späterer Gelegenheit auf einer korrespondierend ausgebildeten Felgenschüssel zentriert befestigt werden. Beispielsweise ist es denkbar, wie in Fig. 3a dargestellt ist, daß in über den Umfang der Felge 2 äquidistant ausgebildeten Gewindebohrungen Gewindebolzen 26 dichtend eingeschraubt werden. Die Gewindebolzen 26 weisen einen bezüglich ihrer axialen Ausrichtung verstellbaren und in zur Zentrierung geeigneten axialen Position fixierbaren Anschlagbolzen 27a auf. Wie in Fig. 3a und b dargestellt ist, werden konzentrisch zum Fahrzeugrad korrespondierende Ringflansche 29 und 30 axial beiderseits der Lagerbolzen angeordnet und axial mit verschraubt. Die Gewindebolzen 26 werden dabei zwischen den Ringflanschen 29 und 30 fest mit verspannt. Die Ringflansche weisen zur zylindrischen Form des Lagerbolzens 26 korrespondierend ausgebildete Halbzylinder schalenförmige Vertiefungen auf, die die Lagerbolzen 26 vor Verspannen aufnehmen. Hierdurch werden die Ringflansche in Umfangsrichtung fixiert. Durch Distanzring 32 und Mutter 31, die radial innerhalb der Flanschringe auf dem Lagerbolzen festgeschraubt werden, erfolgt die Radialfixierung der Flansche 29 und 30. Es ist denkbar, zwischen Anschlag 27 und Flanschringen 29, 30 zusätzlich Distanzringe 28 einzuklemmen. Ebenfalls ist es denkbar, in diesem Bereich Federpakete, beispielsweise Tellerfedern, zur Erhöhung der Vorspannung anzuordnen. Wie in Fig. 3 a und 3 b dargestellt ist, wird der Flanschring 30 konzentrisch an einer Felgenschüssel 33 befestigt. Zwischen Reifen und Felgenschüssel 33 erfolgen nach Vulkanisation somit lediglich Zentrierungen zwischen festen, gut zentrierbaren Teilen.

Die Gewindebolzen 26 weisen einen in ihrer axialen Ausrichtung verstellbaren und in zur Zentrierung von Felge auf Felgenschüssel geeigneter axialer Position fixierbaren Anschlagbolzen 27 auf. Wie in Fig. 3a und b dargestellt ist, werden konzentrisch zum Fahrzeugrad Ringflansche 29 und 30 axial beiderseits der Lagerbolzen angeordnet und zentriert beispielsweise durch Verschraubung, befestigt.

Es ist auch denkbar, die Felge auf der Felgenschüssel akustisch und mechanisch entkoppelbar zum Beispiel durch bekannte Schwingmetallverbindungen zu befestigen, um eine Übertragung von Schwingungen zwischen Reifen und Fahrwerk zu reduzieren.

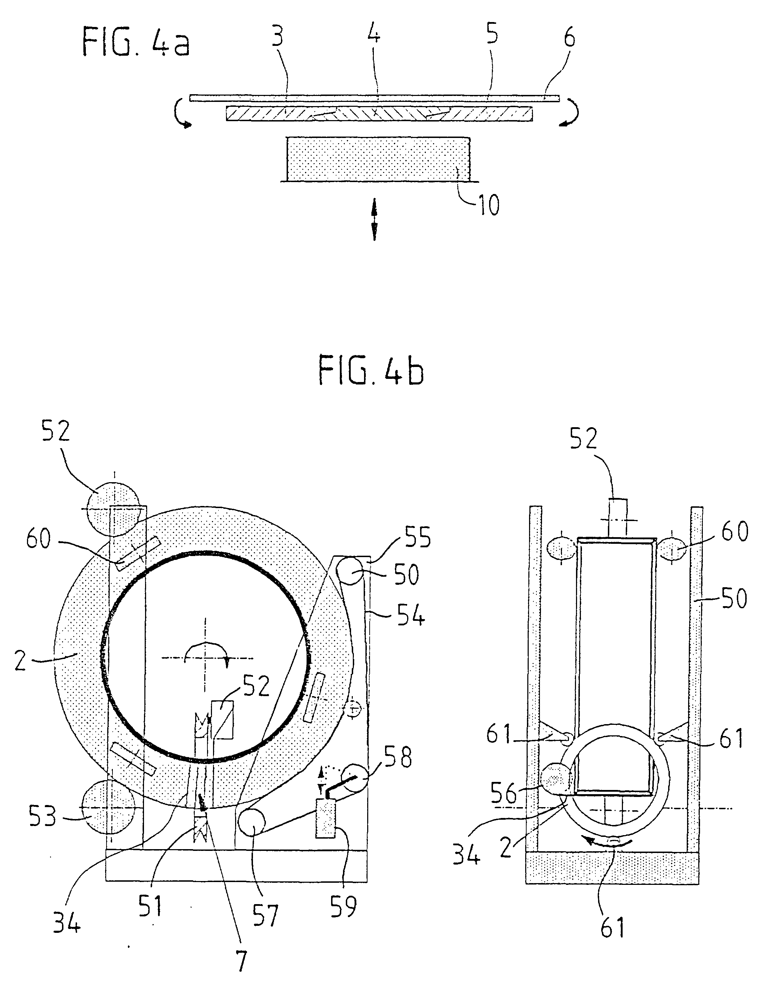

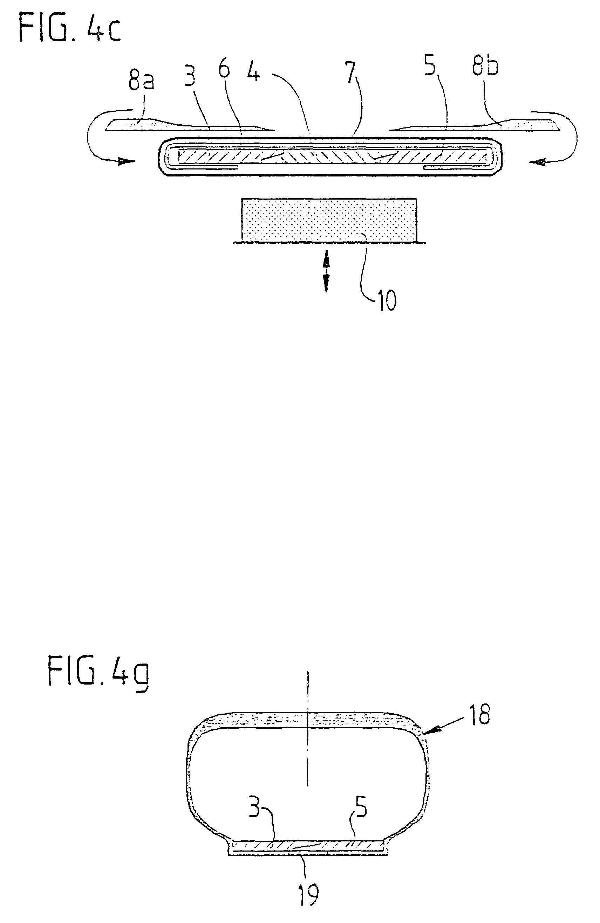

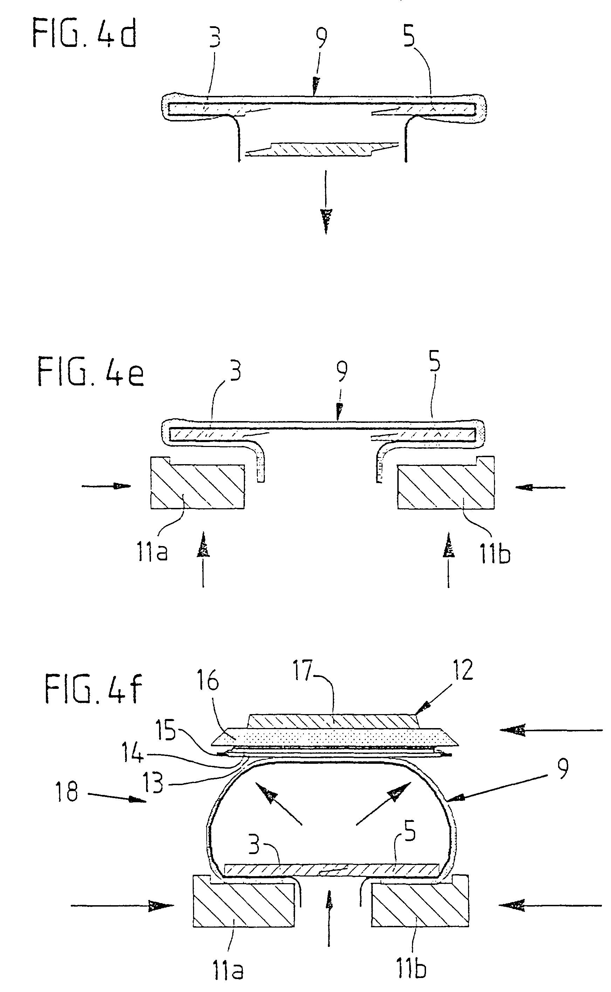

Anstelle des Aufbaus des Reifens entsprechend dem Verfahren von Fig. 1 ist es denkbar, die Karkasse 7 durch Rundumwickeln auf die Felge aufzubringen. Ein derartiger Reifenaufbau ist in Fig. 4 dargestellt. Nach Fertigstellung der Felge wird dabei in bekannter Weise zunächst eine Innenschicht aufgelegt und die über die Felgenenden axial hinausreichende Enden nach radial unten umgeklappt und der Spannkopf 10 entfernt, bevor in bekannter, in den Figuren 4b dargestellter Weise, die Felge mit einem umlaufenden Karkaßfaden 34 bewickelt wird. Hierfür wird die Felge 2 zwischen den Lagerscheiben 52 und 53 und einem Lagerband 54, das über Umlenkrollen 55, 57 und eine Antriebsrolle 58 umlaufend geführt wird, in einer Art Drei-Punkt-Lagerung gelagert und axial zwischen Führungsrollen 60 geführt. Ein Wickelring 51 wird anschließend rund um den Querschnitt der Felge von Fig. 4a, wie in Fig. 4b dargestellt ist, aufgebaut. Der Wickelring 51 ist dabei zwischen Lagerscheiben 61 um den Querschnitt der Felge drehbar gelagert. Am Wickelring 51 ist in bekannter Weise eine Spule 56 mit einem Karkaßfaden 34 befestigt. Der Wickelring 51 wird in bekannter Weise mit konstanter Drehrichtung um den Querschnitt der Felge gedreht. Dabei wird mit Hilfe der vom Antriebsmotor 59 angetriebenen Antriebsrolle 58 die Felge 2 durch das Lagerband 54 langsam in genau zur Drehgeschwindigkeit des Wickelrings 51 abgestimmter Geschwindigkeit um seine Achse gedreht. Durch die Drehbewegung des Wickelrings 51 sowie der Felge 2 wird mit genau abgestimmter Schrittweite der Karkaßfaden 34 spiralenförmig um die Felge 2 gewickelt. Auf diese Weise können eine oder mehrere Karkaßschichten übereinander gewickelt werden. Durch verändern der Drehrichtung von Felge 2 oder vom Wickelring 51 sind dabei kreuzförmige Anordnungen der Karkaßfäden verschiedener Karkaßlagen zueinander möglich.

Wie in Fig. 4c dargestellt ist, werden danach wie im Ausführungsbeispiel von Fig. 1c die Seitenteile 8a und 8b aufgelegt und im axial äußeren Bereich nach radial innen um die Felge umgeklappt. Vor Auflegen der Seitenstreifen 8a und 8b wird die Felge wieder konzentrisch auf den Lagerbock 10 aufgespannt. Anschließend wird der Lagerbock wieder entfernt.

Die Karkasse 7 wird in bekannter Weise in der Mitte ihrer axialen Erstreckung radial unterhalb der Felge über den Umfang hinweg aufgeschnitten und mit ihren Enden axial nach außen umgeklappt. Ebenso ist es denkbar, im axial inneren Bereich radial innerhalb der Felge im Bereich des Schnittes einen sich über den Umfang der Felge erstreckenden Karkaßstreifen herauszuschneiden und zu entfernen.

In den Figuren 4d und 4e ist dargestellt, wie, entsprechend dem Verfahren von Fig. 1, im Anschluß daran die axial inneren Felgenelemente 4 entfernt und die äußeren Felgenelemente 3 und 5 auf Lagerböcke 11a und 11b aufgespannt werden. Die Lagerböcke 11a und 11b werden wie beim Verfahren von Fig. 1 axial aufeinander zubewegt und die Felgenelemente 3 und 5 auf diese Weise miteinander axial verbunden. Die Bombage und die Verbindung mit dem Laufbandpaket erfolgt, wie in Fig. 4f dargestellt ist, wie beim Aufbau von Fig. 1. Zwischen die axialen Endbereiche des Unterbaupakets 9 radial unterhalb der Felge 2 kann ebenfalls zur sichereren Abdichtung im Felgenbereich ein Kautschukdichtstreifen 19 aufgelegt werden, der sich über den Umfang der Felge erstreckt und die beiden Endbereiche miteinander verbindet. Ebenso ist es denkbar, nach Aufschneiden der Karkasse die axial umgelegten Karkassenenden wieder nach axial innen zu klappen und miteinander zu verbinden.

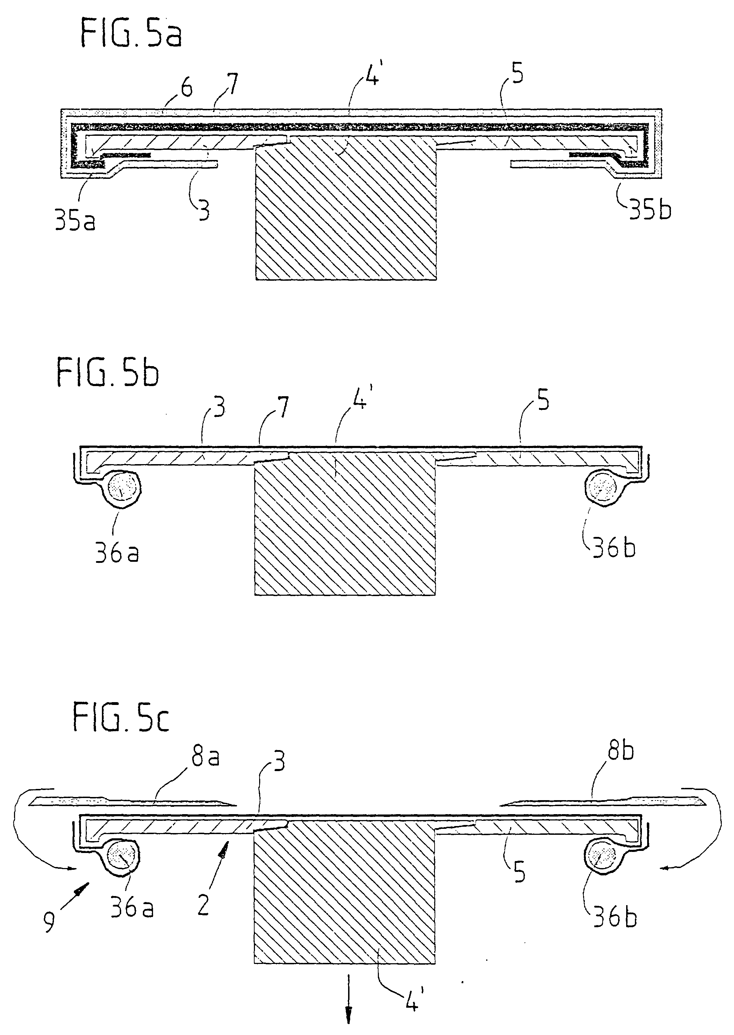

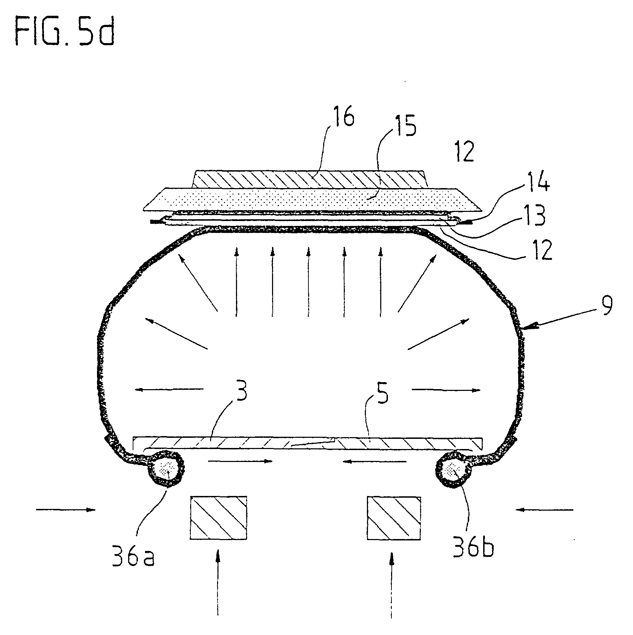

Nach dem erfindungsgemäßen Verfahren kann auf diese Weise ein Fahrzeugreifen ohne Wulstkern erzeugt werden, wodurch Probleme, die durch die Herstellung und Montage der Wulstkerne erzeugt werden, vermieden werden. Der erfindungsgemäße Aufbau des Reifens ist jedoch auch zur Erzeugung von Fahrzeugrädern mit Wulstkernen möglich. Fig. 5 zeigt den Aufbau eines Fahrzeugreifens mit radial innerhalb der Felge angeordneten Wulstkernen. Der Aufbau von Innenschicht 6 und Karkaßschicht 7 nach Fig. 5a entspricht dem der Ausführung des Verfahrens von Fig. 1. Wie in Fig. 5b dargestellt ist, werden im Anschluß daran axial von außen ringförmige Wulstkerne 36a, 36b bekannter Bauart radial innerhalb der Felge in diese eingeschoben. Die Karkaßenden 7 werden um die Kerne 36a, 36b herumgeklappt. Im Anschluß daran erfolgt, wie in der Ausführung von Fig. 1, der Aufbau der Seitenstreifen 8a, 8b. Dies ist in Fig. 5c dargestellt. Auch der weitere Aufbau durch Einfahren von Spannköpfen 11a, 11b, axiales Verbinden der Felgenelemente 3, 5, Erzeugung der Reifentorusform durch Bombage sowie der Verbindung mit dem Laufbandpaket 12 entspricht, wie in Fig. 5d dargestellt ist, dem des Verfahrens von Figur 1. Bei einem derartigen Fahrzeugrad erfolgt die axiale Sicherung des Gummimaterials auf der Felge über die Kernwulste, die sich axial an Begrenzungen 35a,b der Felge abstützen, zusätzliche Haftmittel können entfallen.

Es ist denkbar, die Felge 2 anstelle von drei in axialer Richtung benachbarten Felgenelementen auch aus mehr als drei axial benachbarten Felgenelementen aufzubauen, von denen einer oder mehrere axiale Felgenelemente, die nicht Felgenrandelemente sind, nach Aufbau des Unterbaupakets 9 entfernt werden.

Ebenso ist es denkbar, derartige entfernbare Felgenelemente, wie beipielhaft in Fig. 5 dargestellt ist, als Teile einer herkömmlichen Reifenaufbautrommel auszubilden. Die ausklappbaren Elemente 4 der Reifenaufbautrommel werden den anderen Felgenelementen in ihrer Form entsprechend angepaßt. Am Beispiel von Fig. 5 müssen sie eine gewisse Kippbewegung zu ihrer Entfernung ermöglichen.

Wie in Fig. 6 dargestellt ist, ist es denkbar, die radial äußeren Flächen 41 der Felgenelemente 3 und 5 als glatte zylindrische Stützflächen auszubilden. Ebenso ist es denkbar, die zylindrischen Stützflächen mit zusätzlichem Stützmaterial zu belegen. In der Ausführung von Fig. 7 sind die Felgenelemente 3 und 5 in ihrem axialen Randbereich radial nach außen hornähnlich gekrümmt ausgebildet. Zwischen den Hörnern 42a und 42b sind die hierdurch gebildeten wannenförmigen Vertiefungen mit Stützmaterial 43 ausgefüllt. Die Oberfläche des Stützmaterials 43 bildet eine zylindrische Notlauffläche 41. Das Stützmaterial ist aus hartem Kunststoff, Gummi oder Kunststoffschaum ausgebildet, das unempfindlich gegen Stöße zur Dämpfung und gute Gleiteigenschaften für den Notlauf aufweist. Die ebene zylindrische Oberfläche der Felgenelemente 3, 4, 5 ermögicht eine besonders sichere Abstützung von Innenschicht und Karkassenmaterial beim Auflegevorgang der Kautschukschichten und beim anschließenden Transfer. Bei den in der Felge dauerhaft verbleibenden Felgenelementen ermöglicht die ebene zylindrische Oberfläche zusätzlich sichere Notlaufeigenschaften durch eine schonende, sichere Auflageoberfläche für die abgesenkten Gummibereiche des Reifens bei Luftdruckverlust im Betrieb.

Die durch den erfindungsgemäßen Fahrzeugradaufbau ermöglichte Verwendung von Felgenschüsseln mit besonders großen Felgendurchmessern ermöglicht mehr Freiraum innerhalb der Felge, bei gewünschtem Einzelradantrieb auch größere leistungsstarke Elektromotoren zum Einsatz kommen können.

### Bezugszeichenliste

- 1 - 2 -: Felge
- 3 -: Felgenelemente
- 4 -: Felgenelemente
- 5 -: Felgenelemente
- 6 -: Innenschicht
- 7 -: Karkassenschicht
- 8 -: Seitenstreifen
- 9 -: Unterbaupaket
- 10 -: Spannkopfelemente
- 11a-: Spannköpfe
- 11b-: Spannköpfe
- 12 -: Laufbandpaket
- 13 -: Gürtellage
- 14 -: Gürtellage
- 15 -: Bandage
- 16 -: Laufstreifenunterbau
- 17 -: Laufstreifen
- 18 -: Fahrzeugradrohling
- 19 -: Kautschukstreifen
- 20 -: Vulkanisationspresse
- 21 -: Vulkanisierformseitenteile
- 22 -: Vulkanisierformseitenteile
- 23 -: Profilsegment
- 24 -: Anschlußschlauch
- 25 -: Öffnung
- 26 -: Gewindebolzen
- 27 -: Anschlag
- 28 -: Distanzringe
- 29 -: Ringflansche
- 30 -: Flanschring
- 31 -: Mutter
- 32 -: Distanzring
- 33 -: Felgenschlüssel
- 34 -: Karkaßfaden
- 35 -: axiale Begrenzung
- 36 -: Kerne
- 37 -: konische Halteflächen
- 38 -: konische Halteflächen
- 39 -: konische Halteflächen
- 40 -: konische Halteflächen
- 41 -: äußere Flächen
- 42a-: Horn
- 42b-: Horn
- 43 - Stützmaterial 44 - 45 - 46 - 47 - 48 - 49 - 50 - 51 -: Wickelring
- 52 -: Lagerscheibe
- 53 -: Lagerscheibe
- 54 -: Lagerband
- 55 -: Umlenkrolle
- 56 -: Umlenkrolle
- 57 -: Umlenkrolle
- 58 -: Antriebsrolle
- 59 -: Antriebsmotor
- 60 -: Führungsrolle
- 61 -: Lagerscheiben

## Patentansprüche

1. Fahrzeugrad bestehend aus einer Felge (2) und einem Fahrzeugluftreifen,
- mit vor Vulkanisation auf die Felge (2) aufgebautem Reifen,
- wobei die Felge (2) in ihrer Erstreckung vor Vulkanisation veränderbar ausgebildet ist,
**dadurch gekennzeichnet, daß**
- auf der radial äußeren Oberfläche der Felge (2) eine Notlaufstützfläche mit Stützmaterial (43) für den Notlauf des Reifens ausgebildet ist.

2. Fahrzeugrad mit den Merkmalen von Anspruch 1,
- mit einer in axialer Richtung mehrteilig ausgebildeten Felge,
- wobei zumindest ein axiales Felgenelement aus der Felgenanordnung entfernbar ausgebildet ist,
- und die anderen Felgenelemente axial zusammenrückbar ausgebildet sind.

3. Fahrzeugrad gemäß den Merkmalen von Anspruch 2, - wobei ein aus der Felge entfernbares axiales Felgenelement als Reifenauftrommel ausgebildet ist.

4. Verfahren zum Herstellen eines Fahrzeugrads,
- wobei vor Vulkanisation Reifenaufbaumaterial (6, 7, 8, 9) auf einer Felge (2) aufgebaut wird und die Felge (2) danach in ihrer axialen Erstreckung verkleinert wird,
**dadurch gekennzeichnet,**
- **daß** die Felge (2) vor Belegung mit Reifenaufbaumaterial (6, 7, 8, 9) an ihrer radial äußeren Oberfläche mit Stützmaterial (43) zur Herstellung einer Notlauffläche belegt wird.

5. Verfahren zum Herstellen eines Fahrzeugrads gemäß den Merkmalen von Anspruch 4,
- wobei nach Verkleinerung der Felge vor der Vulkanisation radial außerhalb der Felge aufgebautes Reifenaufbaumaterial zur Erzeugung einer Reifentorusform radial erhoben wird.

6. Verfahren zur Herstellung eines Fahrzeugrades gemäß den Merkmalen von Anspruch 4,
- wobei die axiale Verkleinerung der Felge durch Entfernen von zumindest einem axialen Element der Felge und anschließendes axiales Zusammenrücken der verbleibenden Felgenelemente erfolgt.

7. Verfahren zum Herstellen eines Fahrzeugrades gemäß den Merkmalen von Anspruch 5,
- wobei nach axialem Verkleinern der Felge auf die radiale Innenseite zumindest eine dichtende Kautschuklage zumindest über Stoßstellen der zusammengeschobenen Felgenelemente aufgebracht wird.

8. Verfahren zum Herstellen eines Fahrzeugrades gemäß den Merkmalen von Anspruch 4,
- wobei nach Verkleinern der Felge auf die radiale Innenseite der Felge eine axial sich über den gesamten Felgenbereich erstreckende geschlossene Kautschukschicht erzeugt wird.

9. Verfahren zur Herstellung eines Fahrzeugreifens gemäß den Merkmalen von Anspruch 4,
- wobei vor axialer Verkleinerung der Felge zunächst radial oberhalb der Felge sich über deren Umfang und über den gesamten axialen Erstreckungsbereich der Felge erstreckend und über deren axialen Endbereiche hinwegreichend eine Reifeninnenschicht aufgelegt und die über die axialen Endbereiche der Felge reichenden Endstücke nach radial innen um die Felge umgeklappt werden,
- im Anschluß daran Karkassenmaterial radial oberhalb der Innenschicht derart aufgelegt wird, daß es sich über den Umfang der Felge und in axialer Richtung über die Enden der Felge hinwegreichend erstreckt, und die über die Enden der Felge hinausreichenden Karkassenenden um die Felgenenden nach radial innen um die Felge umgeklappt werden,
- danach Seitenstreifenmaterial über den Umfang der Felge radial oberhalb der Karkasse auf die Karkasse aufgelegt und die die axialen Felgenenden überragenden axialen Bereiche der Seitenstreifen nach radial innen um die Felge umgeklappt werden,
- danach die Felge axial verkleinert wird und dann das radial außerhalb der Felge aufgelegte Reifenaufbaumaterial durch Bombage erhoben wird und dabei in Verbindung mit einem vorbereiteten konzentrischen Laufbandpaket gebracht wird, und
- dann das aufgebaute Fahrzeugrad vulkanisiert wird.

10. Verfahren zur Herstellung eines Fahrzeugreifens gemäß den Merkmalen von Anspruch 4,
- wobei vor axialer Verkleinerung der Felge zunächst radial oberhalb der Felge sich über deren Umfang und über den gesamten axialen Erstreckungsbereich der Felge erstreckend und über deren axialen Endbereiche hinwegreichend eine Reifeninnenschicht aufgelegt und die über die axialen Endbereiche der Felge reichenden Endstücke nach radial innen um die Felge umgeklappt werden,
- danach Karkassenmaterial an den Felgentorus durch Rundumwickeln aufgelegt wird,
- danach Seitenstreifenmaterial über den Umfang der Felge radial oberhalb der Karkasse auf die Karkasse aufgelegt und die die axialen Felgenenden überragenden axialen Bereichen der Seitenstreifen nach radial innen um die Felge umgeklappt werden,
- danach die Karkasse radial innerhalb der Felge kreisförmig konzentrisch aufgetrennt wird,
- danach die Felge axial verkleinert wird und dann das radial außerhalb der Felge aufgelegte Reifenaufbaumaterial durch Bombage erhoben wird und dabei in Verbindung mit einem vorbereiteten konzentrischen Laufbandpaket gebracht wird, und
- dann das aufgebaute Fahrzeugrad vulkanisiert wird.

11. Verfahren zur Herstellung eines Fahrzeugreifens gemäß den Merkmalen von Anspruch 10,
- wobei nach Umklappen der Endbereiche der Seitenstreifen die Karkasse radial innerhalb der Felge kreisförmig konzentrisch aufgetrennt wird und ein sich über den Umfang der Karkasse erstreckender Streifen der Karkasse mit einer axialen Erstreckung, die kleiner als das Maß der axialen Verkleinerung der Felge ist, im Bereich der axialen Auftrennung entfernt wird, und im Anschluß daran die Felge axial verkleinert wird.

12. Verfahren zur Herstellung eines Fahrzeugreifens gemäß den Merkmalen von Anspruch 10 oder 12,
- wobei nach axialer Verkleinerung der Felge die durch die Auftrennung der Karkasse entstandenen Karkassenenden dichtend miteinander verbunden werden.

13. Verfahren zur Herstellung eines Fahrzeugreifens gemäß den Merkmalen von einem oder mehreren der Ansprüche 4 bis 12,
- wobei der Innenraum des Reifens durch die Felge hindurch zur Vulkanisation mit Fluid unter Innendruck beaufschlagt wird.

14. Verfahren zur Herstellung eines Fahrzeugreifens gemäß den Merkmalen von einem oder mehreren der Ansprüche 4 bis 13,
- wobei radial innerhalb der Felge erzeugte Karkassenenden um radial innerhalb der Felgen axial gestützt eingelegte konzentrische Kernringe vor der Vulkanisation axial nach außen umgelegt werden.

15. Verwendung einer Felge eines Fahrzeugluftrads sowohl als Träger von Reifenaufbaumaterial und Stützmaterial für Notlauf während des Reifenaufbaus als auch als Träger des fertig vulkanisierten Reifens im Betriebszustand des Fahrzeugrads.

16. Verwendung einer Felge eines Fahrzeugrads gemäß Anspruch 15 zusätzlich als Kammerelement beim Aufbau des Innendrucks im Reifen bei der Vulkanisation.

## Claims

1. Vehicle wheel, comprising a rim (2) and a pneumatic vehicle tyre,
- having a tyre built onto the rim (2) prior to vulcanisation,
- wherein the rim (2) is adapted to be variable in respect of its extension prior to vulcanisation,
**characterised in that**
- an emergency-running supporting face is provided with supporting material (43) on the radially outer surface of the rim (2) for the emergency-running of the tyre.

2. Vehicle wheel having the features of claim 1,
- having a rim which has a multiple-part construction when viewed with respect to the axial direction,
- wherein at least one axial rim element is adapted so as to be removable from the rim arrangement,
- and the other rim elements are adapted to be axially moved together.

3. Vehicle wheel according to the features of claim 2,
- wherein an axial rim element, which is removable from the rim, is configured as a tyre building drum.

4. Method of producing a vehicle wheel,
- wherein tyre building material (6, 7, 8, 9) is built-up on a rim (2) prior to vulcanisation, and the rim (2) is thereafter reduced in respect of its axial extension,
**characterised in that**
- prior to being covered with tyre building material (6, 7, 8, 9), the rim (2) is covered on its radially outer surface with supporting material (43) to produce an emergency-running face.

5. Method of producing a vehicle wheel according to the features of claim 4,
- wherein tyre building material, which has built-up radially externally of the rim after reduction of the rim prior to the vulcanisation, is raised radially to produce a toroidal tyre shape.

6. Method of producing a vehicle wheel according to the features of claim 4,
- wherein the axial reduction of the rim is effected by the removal of at least one axial element of the rim and by the subsequent axial moving-together of the remaining rim elements.

7. Method of producing a vehicle wheel according to the features of claim 5,
- wherein, after the axial reduction of the rim, at least one sealing rubber ply is applied to the radial internal surface, at least via locations where the rim elements, which have been pushed together, abut one another.

8. Method of producing a vehicle wheel according to the features of claim 4,
- wherein, after the reduction of the rim, a continuous rubber layer, which extends axially over the entire rim region, is produced on the radial internal surface of the rim.

9. Method of producing a vehicle tyre according to the features of claim 4,
- wherein, prior to the axial reduction of the rim, an internal tyre layer is initially deposited radially above the rim so as to extend over the circumference thereof and over the entire axial extension region of the rim and so as to extend beyond the axial end regions thereof, and the end-pieces, which extend over the axial end regions of the rim, are folded radially inwardly over the rim,
- carcase material is subsequently deposited radially above the internal layer in such a manner that it extends over the circumference of the rim and, when viewed with respect to the axial direction, beyond the ends of the rim, and the carcase ends, which extend beyond the ends of the rim, are folded over the rim ends radially inwardly over the rim,
- thereafter lateral strip material is deposited upon the carcase over the circumference of the rim radially above the carcase, and the axial regions of the lateral strips, which regions protrude beyond the axial rim ends, are folded radially inwardly over the rim,
- thereafter the rim is axially reduced, and then the tyre building material, which is deposited radially externally of the rim, is raised by cambering and is thereby brought into contact with a prepared concentric bundle of tread strips, and
- then the built-up vehicle wheel is vulcanised.

10. Method of producing a vehicle tyre according to the features of claim 4,
- wherein, prior to the axial reduction of the rim, an internal tyre layer is deposited initially radially above the rim so as to extend over the circumference thereof and over the entire axial extension region of the rim and so as to extend beyond the axial end regions thereof, and the end-pieces, which extend over the axial end regions of the rim, are folded radially inwardly over the rim,
- thereafter carcase material is deposited on the rim torus by winding it therearound,
- thereafter lateral strip material is deposited upon the carcase over the circumference of the rim radially above the carcase, and the axial regions of the lateral strips, which regions protrude beyond the axial rim ends, are folded radially inwardly over the rim,
- thereafter the carcase is split radially internally of the rim in a circular and concentric manner,
- thereafter the rim is axially reduced, and then the tyre building material, which is deposited radially externally of the rim, is raised by cambering and thereby brought into contact with a prepared concentric bundle of tread strips, and
- then the built-up vehicle wheel is vulcanised.

11. Method of producing a vehicle tyre according to the features of claim 10,
- wherein, after the end regions of the lateral strips have been folded-over, the carcase is split radially internally of the rim in a circular and concentric manner, and a strip, which extends over the circumference of the carcase, is removed from the carcase with an axial extension, which is smaller than the dimension of the axial reduction of the rim, in the region of the axial separation, and the rim is subsequently axially reduced.

12. Method of producing a vehicle tyre according to the features of claim 10 or 12,
- wherein, after the axial reduction of the rim, the carcase ends, produced by the splitting of the carcase, are sealingly interconnected.

13. Method of producing a vehicle tyre according to the features of one or more of claims 4 to 12,
- wherein fluid under internal pressure is introduced into the interior of the tyre through the rim for the vulcanisation.

14. Method of producing a vehicle tyre according to the features of one or more of claims 4 to 13,
- wherein carcase ends, produced radially internally of the rim, are wrapped axially outwardly around concentric core rings, which are inserted in an axially supported manner radially internally of the rims, prior to the vulcanisation.

15. Use of a rim of a pneumatic vehicle wheel both as a carrier of tyre building material and supporting material for emergency-running during the construction of the tyre and as a carrier of the completely vulcanised tyre in the operational state of the vehicle wheel.

16. Use of a rim of a vehicle wheel according to claim 15 additionally as a chamber element during the build-up of the internal pressure in the tyre during the vulcanisation.

## Revendications

1. Roue pour véhicule constituée d'une jante (2) et d'un pneumatique de véhicule avec un pneumatique monté sur la jante (2) avant vulcanisation, dans laquelle la jante (2) est conçue pour pouvoir être modifiée en extension avant vulcanisation, **caractérisée par le fait que** sur la surface radialement extérieure de la jante (2) est formée une surface de soutien en roulement de secours avec un matériau de soutien (43) pour le roulement de secours du pneumatique.

2. Roue de véhicule présentant des caractéristiques de la revendication 1, avec une jante conçue en plusieurs pièces selon la direction axiale, dans laquelle au moins un élément axial de la jante est conçu pour pouvoir être écarté du dispositif de jante, et les autres éléments de la jante sont conçus pour pouvoir se rapprocher axialement.

3. Roue de véhicule selon les caractéristiques de la revendication 2, dans laquelle un élément de la jante que l'on peut écarter axialement de la jante est conçu sous forme de tambour de fabrication du pneumatique.

4. Procédé de fabrication d'une roue de véhicule, dans lequel, avant vulcanisation, on monte sur une jante (2) le matériau de fabrication du pneumatique (6, 7, 8, 9) puis on réduit la jante (2) dans son extension axiale, **caractérisé par le fait, qu'**avant de garnir la jante du matériau de fabrication du pneumatique (6, 7, 8, 9), on la garnit sur sa surface radialement extérieure d'un matériau de soutien (43) pour réaliser une surface de roulement de secours.

5. Procédé de fabrication d'une roue de véhicule selon les caractéristiques de la revendication 4, dans lequel après réduction de la jante, avant la vulcanisation, on soulève radialement le matériau de fabrication du pneumatique monté radialement à l'extérieur de la jante pour obtenir une forme de tore de pneumatique.

6. Procédé de fabrication d'une roue de véhicule selon les caractéristiques de la revendication 4, dans lequel la réduction axiale de la jante se fait en enlevant au moins un élément axial de la jante et en rapprochant ensuite axialement les éléments de la jante qui subsistent.

7. Procédé de fabrication d'une roue de véhicule selon les caractéristiques de la revendication 5, dans lequel, après réduction axiale de la jante, on applique sur la face radialement intérieure au moins une couche de caoutchouc d'étanchéité au moins sur les endroits de jonction sur les éléments de la jante que l'on a rapprochés.

8. Procédé de fabrication d'une roue de véhicule selon les caractéristiques de la revendication 4, dans lequel, après réduction de la jante on produit sur la face radialement intérieure de la jante une couche de caoutchouc fermée qui s'étend axialement sur la totalité du domaine de la jante.

9. Procédé de fabrication d'un pneumatique de véhicule selon les caractéristiques de la revendication 4,
◆ dans lequel, avant réduction axiale de la jante, on dépose tout d'abord radialement au-dessus de la jante une couche intérieure du pneumatique qui s'étend au-delà de la périphérie de la jante et sur la totalité du domaine d'extension axiale de la jante et qui va au-delà de ses zones d'extrémité axiales et on rabat radialement vers l'intérieur autour de la jante les morceaux d'extrémité qui vont au-delà des zones d'extrémité axiales de la jante,
◆ ensuite on dépose radialement au-dessus de la couche intérieure un matériau de carcasse de façon qu'il s'étende suffisamment sur la périphérie de la jante et selon la direction axiale au-delà des extrémités de la jante, et on rabat radialement vers l'intérieur autour de la jante les extrémités de la carcasse qui vont au-delà des extrémités de la jante,
◆ ensuite on dépose sur la carcasse, radialement au-dessus de la carcasse, un matériau de bande latérale sur la périphérie de la jante et on rabat radialement vers l'intérieur autour de la jante les zones axiales des bandes latérales qui débordent des extrémités axiales de la jante,
◆ ensuite on réduit axialement la jante puis, par bombage, on soulève le matériau de fabrication du pneumatique déposé radialement à l'extérieur de la jante et on l'amène en liaison avec un paquet de bande de roulement concentrique préparé et,
◆ on vulcanise alors la roue de véhicule ainsi fabriquée.

10. Procédé de fabrication d'un pneumatique de véhicule selon les caractéristiques de la revendication 4,
◆ dans lequel, avant réduction axiale de la jante, on dépose tout d'abord radialement au-dessus de la jante une couche intérieure du pneumatique qui s'étend au-delà de la périphérie de la jante et sur la totalité du domaine d'extension axiale de la jante et qui va au-delà de ses zones d'extrémité axiales et on rabat radialement vers l'intérieur autour de la jante les morceaux d'extrémité qui vont au-delà des zones d'extrémité axiales de la jante,
◆ ensuite on dépose le matériau de carcasse sur le tore de jante par enroulement circulaire,
◆ ensuite on dépose sur la carcasse, radialement au-dessus de la carcasse, un matériau de bande latérale sur la périphérie de la jante et on rabat radialement vers l'intérieur autour de la jante les zones axiales des bandes latérales qui débordent des extrémités axiales de la jante,
◆ ensuite, en la découpant, on ouvre concentriquement en cercle la carcasse selon la direction radiale à l'intérieur de la jante,
◆ ensuite on réduit axialement la jante puis, par bombage, on soulève le matériau de fabrication du pneumatique déposé radialement à l'extérieur de la jante et on l'amène en liaison avec un paquet de bande de roulement concentrique préparé et,
◆ on vulcanise alors la roue de véhicule ainsi fabriquée.

11. Procédé de fabrication d'un pneumatique de véhicule selon les caractéristiques de la revendication 10, dans lequel, après rabattement des zones d'extrémité de la bande latérale, en la découpant, on ouvre la carcasse concentriquement en cercle à l'intérieur de la jante et on enlève, dans la zone de la découpe axiale, une bande de carcasse qui s'étend sur la périphérie de la carcasse et dont l'extension axiale est inférieure à la valeur de la réduction axiale de la jante, puis on réduit axialement la jante.

12. Procédé de fabrication d'un pneumatique de véhicule selon les caractéristiques de la revendication 10 ou 12, dans lequel, après réduction axiale de la jante, on relie l'une à l'autre avec étanchéité, les extrémités de la carcasse qui sont apparues par suite de la découpe de la carcasse.

13. Procédé de fabrication d'un pneumatique de véhicule selon les caractéristiques d'une ou plusieurs des revendications 4 à 12, dans lequel, pour la vulcanisation, on envoie du fluide dans l'espace intérieur du pneumatique par la jante en créant une pression intérieure.

14. Procédé de fabrication d'un pneumatique de véhicule selon les caractéristiques d'une ou plusieurs des revendications 4 à 13, dans lequel, avant la vulcanisation, on rabat axialement vers l'extérieur des extrémités de carcasse, produites radialement à l'intérieur de la jante, autour de noyaux annulaires concentriques placés radialement à l'intérieur de la jante en appui axial.

15. Emploi d'une jante d'un pneumatique de véhicule aussi bien comme support du matériau de fabrication du pneumatique et matériau de soutien pour roulement de secours pendant la fabrication du pneumatique que comme support du pneumatique vulcanisé fini lorsque la roue du véhicule est en service.

16. Emploi, en outre, d'une jante d'un pneumatique de véhicule selon la revendication 15 comme élément formant une chambre lors de la création d'une pression intérieure dans le pneumatique lors de la vulcanisation.
